Europäisches Patentamt

(19) European Patent Office

Office européen des brevets

(11) Numéro de publication: **0 290 333**
**A1**

# (12) DEMANDE DE BREVET EUROPEEN

(21) Numéro de dépôt: 88401069.5

(22) Date de dépôt: 03.05.88

(51) Int. Cl.⁴: **G 02 B 5/32**
G 02 B 27/02, G 03 H 1/04

(30) Priorité: 07.05.87 FR 8706487

(43) Date de publication de la demande:
09.11.88 Bulletin 88/45

(84) Etats contractants désignés: DE FR GB

(71) Demandeur: THOMSON-CSF
173, Boulevard Haussmann
F-75379 Paris Cédex 08 (FR)

(72) Inventeur: Rousseau, Pascal
THOMSON-CSF SCPI 19, avenue de Messine
F-75008 Paris (FR)

(74) Mandataire: Trocellier, Roger et al
THOMSON-CSF SCPI 19, avenue de Messine
F-75008 Paris (FR)

(54) Dispositif optique holographique diffuseur, et procédé d'obtention.

(57) Dispositif permettant d'observer simultanément par diffusion deux images lumineuses avec un rendement optique
élevé.

Il comporte un hologramme (H) sur un support transparent
(V) l'hologramme H produit la diffusion d'un premier rayonnement lumineux incident provenant d'un dispositif générateur
d'image (2) par réflexion selon des indicatrices (I1,I2,...) qui
convergent dans une portion de l'espace (P0) en s'appuyant
sur un contour fermé (C0) pour y délimiter une zone (Z0) à
travers laquelle s'effectue l'observation de l'image diffusée par
réflexion. Un deuxième générateur d'image (3) projette une
deuxième image à l'arrière de l'hologramme qui la diffuse par
transmission également dans la même portion d'espace et dans
la même zone (Z0). L'hologramme (H) est sélectif en longueur
d'onde dans une première bande spectrale pour la première
image et dans une deuxième bande pour la deuxième image. Le
montage peut être conçu pour travailler à la transmission pour
les deux images.

L'invention s'applique dans des systèmes optiques de
visualisation d'image.

FIG_3

**Description**

## DISPOSITIF OPTIQUE HOLOGRAPHIQUE DIFFUSEUR ET PROCEDE D'OBTENTION

La présente invention concerne un dispositif optique holographique diffuseur ainsi que son procédé d'obtention. L'invention est relative, plus particulièrement, à la réalisation d'un diffuseur transparent à indicatrice orientée, sélectif en longueur d'onde et permettant l'observation simultanée de deux images.

On entend par indicatrice en un point d'un élément optique diffuseur, le diagramme de répartition angulaire énergétique du rayonnement diffusé en ce point par transmission ou par réflexion, selon qu'il s'agit d'un diffuseur transparent ou réfléchissant.

Les diffuseurs sont couramment utilisés pour former une image dans un système optique. Ils ne sont pas sélectifs en longueur d'onde. Ils diffusent la lumière comprise dans une large bande spectrale. Les indicatrices sont homogènes sur tout le diffuseur, c'est-à-dire qu'elles présentent pratiquement un même diagramme de répartition énergétique en chaque point. La diffusion peut être quasiment omnidirectionnelle se rapprochant de la loi de Lambert ; dans ce cas, la distribution de l'énergie autour du point diffusant est indépendante de l'orientation du faisceau incident. Selon d'autres diffuseurs l'indicatrice présente un diagramme plus réduit et donc une certaine directivité de l'énergie diffusée et dans ce cas, la distribution de l'énergie au niveau du point diffusant est fonction de l'orientation du faisceau incident.

L'énergie est distribuée autour de la direction du faisceau incident lorsqu'il s'agit de diffuseur travaillant en transmission. L'énergie est diffusée autour de la direction symétrique de la direction du faisceau incident par rapport à la normale au diffuseur, lorsqu'il s'agit d'un diffuseur travaillant en réflexion.

Pour accroître la luminance de l'image dans la direction principale de diffusion, ou axe du diagramme énergétique, on utilise une indicatrice réduite et un effet directif. La limite à la réduction de la largeur de l'indicatrice est rapidement atteinte lorsque l'ensemble des indicatrices ne couvre plus une zone ou pupille d'observation prévue. En effet, pour observer une image diffusée par le support diffusant, l'image ayant été projetée ou formée sur ce support, il est nécessaire de pouvoir observer la totalité des points à partir de cette zone d'observation. Il faut donc bien que les indicatrices des différents points de la surface diffusante passent au moins partiellement par l'oeil de l'observateur et donc par la zone d'observation située dans une portion de l'espace environnant le diffuseur.

Pour concilier à la fois des impératifs de luminance importante et de faculté d'observation préservée d'une image diffusée il est connu d'utiliser des hologrammes dont les propriétés permettent, en outre, la sélection spectrale du rayonnement diffusé.

Il est connu, notamment par les demandes de brevets WO82/04327 et GB-A-2 104 678, de réaliser un dispositif optique holographique diffuseur comportant un hologramme obtenu par enregistrement d'une plaque photosensible et déterminé pour diffuser un rayonnement lumineux selon des indicatrices qui convergent dans une portion de l'espace, en s'appuyant sur un contour fermé donné, pour délimiter une zone à travers laquelle s'effectue l'observation du rayonnement diffusé par l'hologramme.

L'hologramme peut être déterminé sélectif pour diffuser un rayonnement compris dans une bande spectrale délimitée.

Pour certaines observations il peut être utile de pouvoir observer simultanément deux images lumineuses en superposition.

Selon l'invention le dispositif optique holographique diffuseur est aménagé pour permettre cette observation simultanée de deux images distinctes en utilisant un hologramme sélectif dans une première bande spectrale pour une première image et dans une seconde bande spectrale pour la deuxième image.

Selon l'invention, il est réalisé un dispositif optique holographique comportant un hologramme obtenu par enregistrement d'une plaque photosensible et déterminé pour produire la diffusion d'un rayonnement lumineux selon des indicatrices qui convergent dans une portion de l'espace en s'appuyant sur un contour fermé, pour délimiter une zone à travers laquelle s'effectue l'observation du rayonnement diffusée par l'hologramme, un premier moyen de visualisation annexe produisant une première image lumineuse à observer, caractérisé en ce qu'un second moyen de visualisation annexe produit une deuxième image lumineuse à observer, ladite plaque comportant un support transparent permettant d'observer la deuxième image par transmission à travers celle-ci et l'hologramme diffuseur, l'observation simultanée des deux images s'effectuant à travers ladite zone dans un champ d'observation délimité par ladite portion d'espace.

Les particularités et avantages de l'invention apparaîtront dans la description qui suit donnée à titre d'exemple, à l'aide des figures annexées qui représentent :

- Fig.1, un schéma de rappel d'un dispositif optique holographique diffuseur travaillant en réflexion ;
- Fig.2, un schéma de rappel d'un dispositif optique holographique diffuseur travaillant en transmission ;
- Fig.3, un schéma montrant l'utilisation du dispositif optique holographique selon la figure 1 combiné avec des moyens annexes pour produire une image diffusée par réflexion et éventuellement une deuxième image transmise à travers le diffuseur ;
- Fig.4, un schéma montrant l'utilisation du dispositif holographique selon la figure 2 combiné avec des moyens annexes pour produire une image diffusée par transmission et éventuellement une deuxième image transmise à travers le diffuseur.

- Fig.5, un schéma d'un dispositif optique holographique diffuseur selon la figure 1 et produisant plusieurs zones d'observation distinctes ;

- Fig.6, un schéma relatif au procédé d'obtention d'un dispositif optique holographique diffuseur selon la figure 1 ;

- Fig.7, un schéma d'un procédé d'obtention d'un dispositif optique holographique diffuseur selon la figure 2 ;

- Fig.8, un schéma de détail d'un montage de l'optique dans le procédé selon figure 6 ou figure 7 ;

- Figs.9 et 10, des schémas partiels relatifs à l'aménagement du procédé d'obtention selon la figure 6 ou 7 pour obtenir un dispositif optique holographique diffuseur selon l'invention.

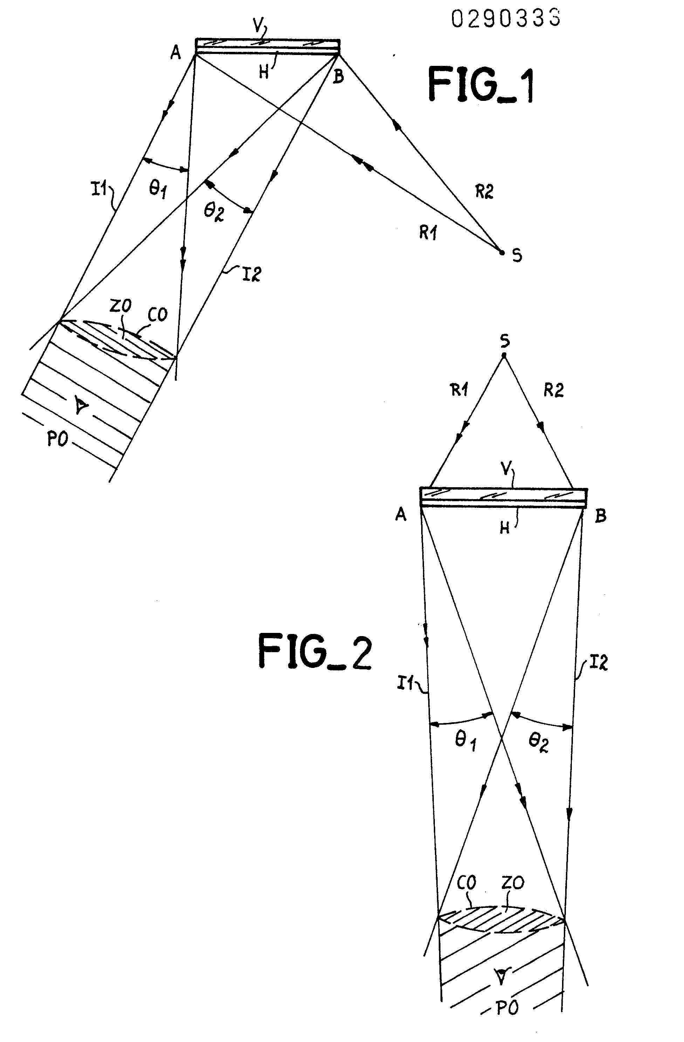

La figure 1 représente, à titre de rappel, un dispositif optique holographique diffusant par réflexion. L'hologramme H est obtenu par enregistrement d'une plaque photosensible V. Il a été considéré une source ponctuelle S placée à distance du diffuseur et qui l'éclaire. Un rayon R1 quelconque issu de la source et parvenant à l'hologramme, par exemple le rayon R1 qui aboutit au point A et à une extrémité, est diffusé en ce point selon un cône, ou indicatrice, I1 d'angle θ1. De même un autre rayon tel que le rayon extrême R2 aboutissant à l'autre extrémité en B, est également diffusé selon une autre indicatrice I2 d'angle θ2. L'hologramme H est déterminé pour produire la diffusion des rayonnements lumineux réfléchis selon des indicatrices qui convergent toutes dans une portion de l'espace P0 en s'appuyant sur le contour fermé C0 pour délimiter une zone d'observation Z0 à travers laquelle est vu le rayonnement diffusé par l'hologramme H en n'importe quel point de celui-ci par un observateur qui sera situé dans l'espace P0 au niveau ou en aval de la zone Z0. Les indicatrices I1, I2 et autres des divers points de l'hologramme s'appuient sur le contour C0 et présentent ainsi une certaine convergence délimitant la zone d'observation Z0 à travers laquelle est vue la totalité de l'hologramme diffusant H.

La figure 2 rappelle, de manière similaire, un dispositif optique holographique diffusant par transmission. Dans ce cas la plaque V support de l'hologramme H est en matériau transparent, par exemple en verre.

On remarque sur ces figures que les directions axiales des indicatrices ne répondent pas aux lois conventionnelles de la réflexion ou de la transmission mais aux propriétés directionnelles particulières de l'enregistrement holographique, propriétés diffractives qui assurent la convergence désirée des indicatrices et la délimitation de la zone d'observation Z0.

La zone d'observation Z0 peut être restreinte et ainsi le rendement énergétique de la diffusion est important. Le fait d'utiliser un hologramme permet de régler l'indicatrice à la fois en orientation de sa direction axiale, en largeur angulaire, et en profil c'est-à-dire répartition énergétique. Il en résulte, en particulier, que l'on peut également avoir une densité d'énergie variable dans la zone d'observation Z0 et qui pourrait être par exemple plus forte vers la périphérie qu'au centre, ou inversement. Ce choix est à considérer en fonction de l'application prévue.

Le fait d'utiliser un hologramme permet d'assurer, en outre, une sélection spectrale en longueur d'onde et qui peut être très fine. Par exemple, la répartition lumineuse à diffusée peut être une image produite à partir d'un tube à rayons cathodiques qui émet donc dans une bande spectrale réduite ; l'hologramme peut ainsi être déterminé diffusant dans cette bande spectrale et sans effet, donc transparent, pour les autres longueurs d'onde.

Sur un même élément optique holographique diffusant H, pour une même direction d'éclairement ou une même source éclairante, le cône de diffusion (I1, I2,...) peut être orienté différemment suivant la position du point sur la plaque ; l'ouverture du cône peut être variable ainsi que la répartition d'énergie dans le cône.

L'élément optique holographique diffusant assure ainsi une fonction diffusante uniquement pour des longueurs d'onde comprises une bande spectrale délimitée. Il est transparent pour les autres longueurs d'onde ; cette transparence n'est limitée que par la transmission intrinsèque des matériaux utilisés, notamment pour constituer la plaqué support de l'enregistrement.

En outre, la luminance de l'image formée peut être optimisée dans la zone d'observation, indépendamment de la géométrie du dispositif holographique. Le fait d'utiliser un élément optique holographique permet en effet d'avoir un support V de forme quelconque et non obligatoirement plan comme représenté sur les figures, quoique la version plane soit la plus commode à envisager pour l'exécution.

Le rendement énergétique peut être proche de 1, c'est-à-dire que l'énergie transportée par le faisceau incident se retrouve réparti à la demande en quasi-totalité dans la zone d'observation Z0 prévue.

Les techniques rappelées suivant les figures 1 et 2 sont utilisées, selon l'invention, pour diffuser une deuxième image lumineuse en superposition avec la première et permettre leur observation simultanée dans la pupille délimitée par le contour CO.

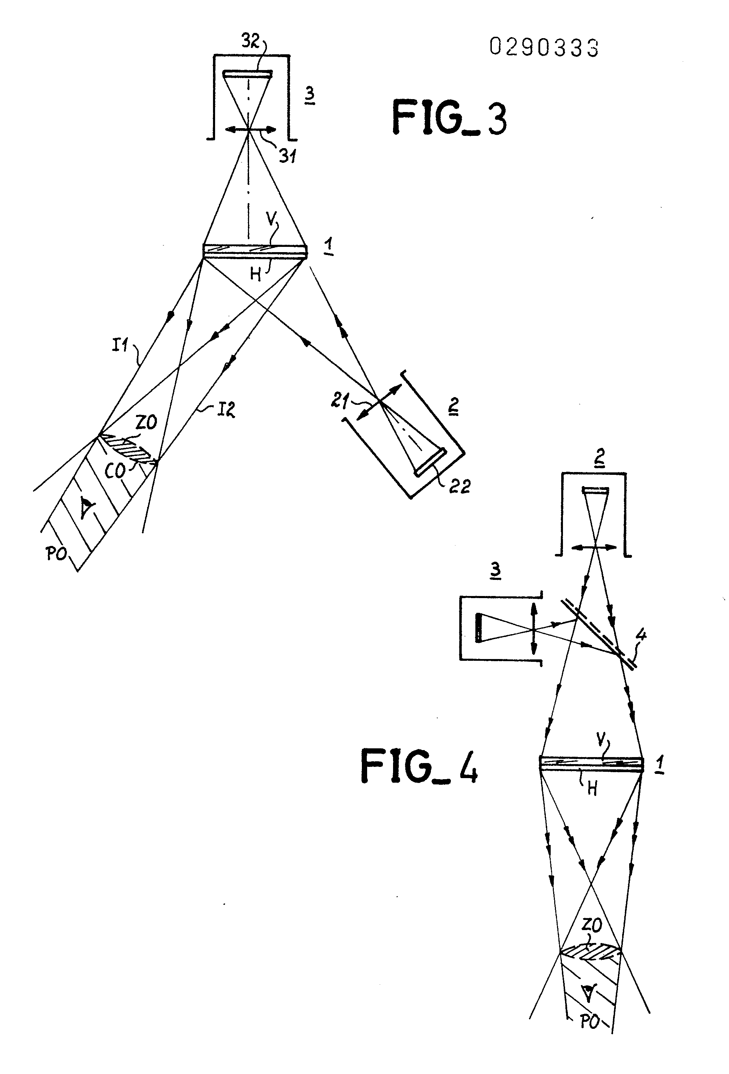

Un premier montage dérivé de la figure 1 est schématisé sur la figure 3. Le support V du dispositif diffuseur 1 est en matériau transparent pour permettre l'observation d'une deuxième image, la première étant vue par réflexion. Un premier dispositif 2 projette cette première image lumineuse sur le plan de l'hologramme H du diffuseur 1. Le diffuseur 2 peut consister en une optique de transposition d'image 21 et un générateur d'image 22, par exemple une matrice à cristaux liquides ou un tube à rayons cathodiques. Un deuxième dispositif 3 peut être constitué similairement d'une optique 31 et d'un générateur d'image 32 et projette la deuxième image lumineuse à l'arrière du diffuseur. L'hologramme H est adapté, comme il a été détaillé précédemment pour réfléchir le rayonnement relatif à la bande spectrale du générateur 22. Il est de plus adapté pour transmettre cette fois le rayonnement relatif à la bande spectrale du générateur 32, étant entendu que ces deux bandes sont distinctes pour permettre simultanément le fonctionnement optimal par réflexion de l'une et par transmission de l'autre. En l'absence du dispositif 3 l'observateur peut voir en superposition la première image réfléchie et la vision transmise du paysage extérieur dans la bande de transmission.

Un deuxième montage dérivé de la figure 2 est montré sur la figure 4 où les deux images sont projetées à l'arrière du dispositif holographique diffuseur 1 qui travaille cette fois uniquement à la transmission, les générateurs 2 et 3 se trouvent d'un même côté par rapport au dispositif 1 et il y a lieu de prévoir une optique mélangeuse 4. Si les sources génératrices 2 et 3 d'image présentent des bandes spectrales de rayonnement différentes, l'optique mélangeuse 4 peut être constituée avantageusement par un miroir dichroïque. Dans cette configuration il n'est pas exclu de travailler dans la même bande et l'élément 4 peut être constitué par un miroir partiellement transparent dans ce cas.

Le dispositif optique holographique diffuseur conforme à l'invention admet des variantes. L'une de celles-ci consiste à concevoir l'hologramme H pour produire plusieurs zones d'observation à la place d'une unique zone Z0, ces zones étant coplanaires ou non, de mêmes dimensions ou de dimensions différentes, jointives ou séparées, etc.

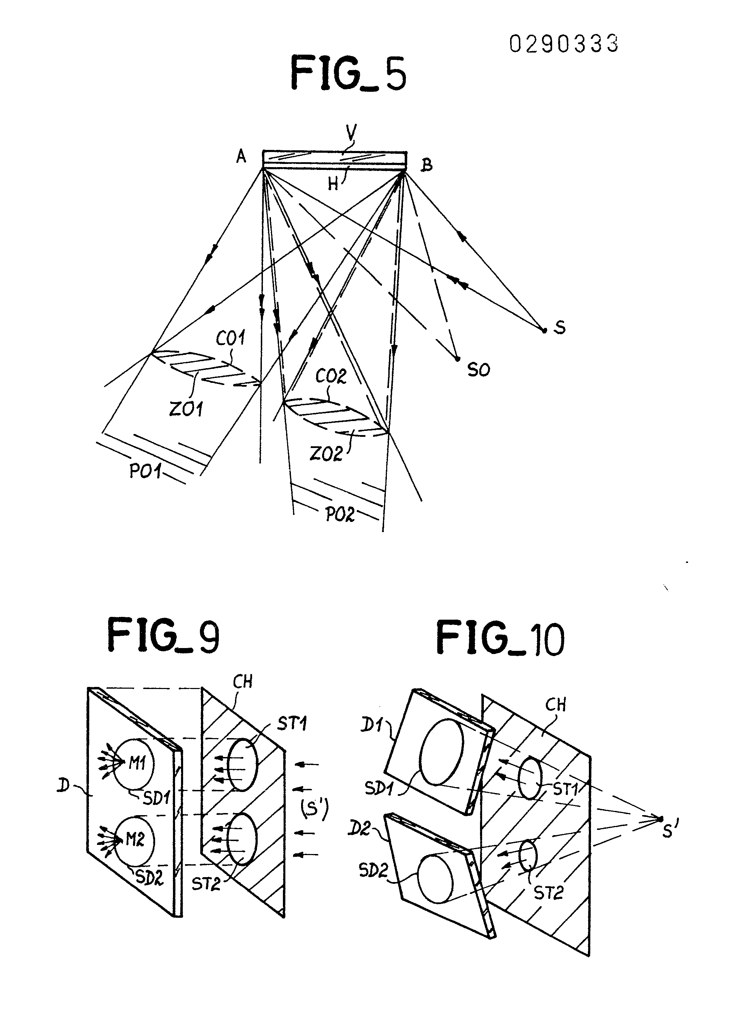

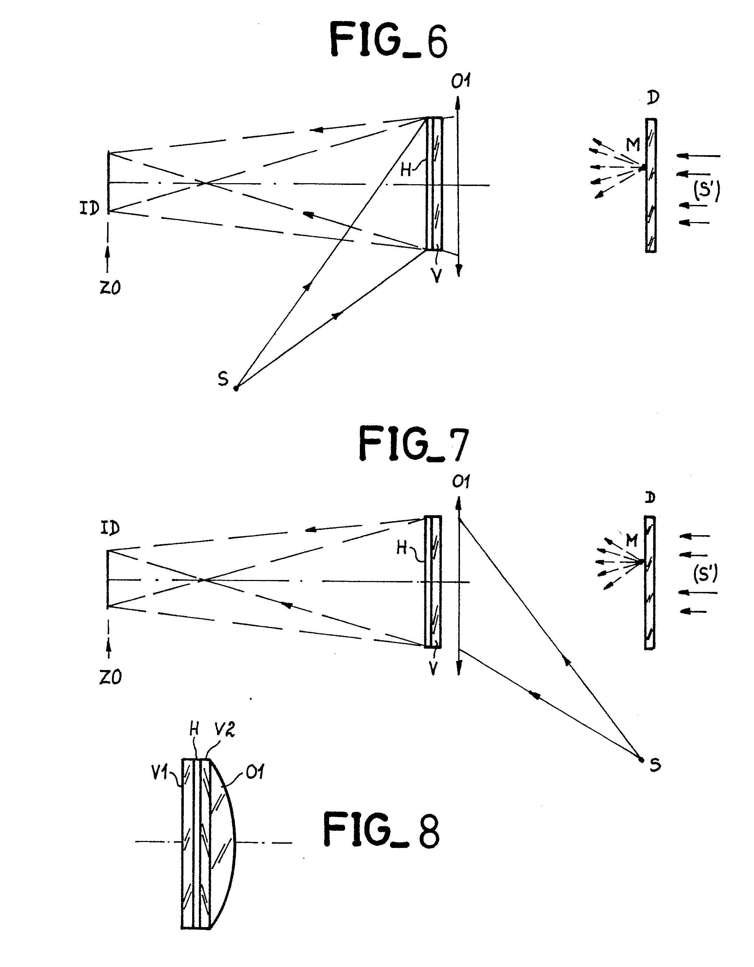

La figure 5 reprend le montage de la figure 1 travaillant en réflexion et illustre à titre d'exemple la formation de deux zones Z01 et Z02 à partir des sources S et S0; dans ce montage le support V n'est pas transparent. L'obtention de l'hologramme H est rappelé dans le cas des figures 6 et 7 pour les montages du type figure 1 et figure 2 respectivement, en faisant interférer, de manière classique, deux ondes lumineuses. En chaque point de l'élément optique holographique à enregistrer, une première onde a la direction du faisceau incident prévu en ce point. La deuxième onde est divergente dans un cône s'appuyant sur le contour de la zone d'observation. La première onde est fournie par la source S qui est orientée de même façon que pour l'utilisation prévue, vis-à-vis de l'élément optique holographique H. La deuxième onde est plus complexe ; elle peut être créée par le montage indiqué comportant un diffuseur transparent D éclairé par une source S' non figurée. Cette source S' peut, par exemple, produire un rayonnement parallèle homogène éclairant l'arrière du diffuseur. Chaque point M du diffuseur D émet selon une indicatrice un rayonnement diffusé. Ce rayonnement diffusé est repris par une optique O1 qui forme une image ID du diffuseur à l'emplacement de la zone d'observation Z0 prévue et ayant la dimension de cette zone d'observation.

Ainsi en chaque point de l'hologramme H interfère une première onde représentative de l'onde incidente et une deuxième onde divergente couvrant la zone d'observation, ceci indépendamment de la forme et de l'orientation du support V.

Dans ces montages, l'hologramme H et son support représenté par une plaque transparente V sont accolés à l'optique 1.

La figure 8 montre une disposition avantageuse possible suivant laquelle l'optique O1 est une lentille plan-convexe dont la face plane est utilisée pour l'accoler avec une face plane correspondante du support V. L'hologramme H peut être compris, comme représenté entre deux plaques transparentes V1 et V2 selon un montage en sandwich.

Pour réaliser l'hologramme H correspondant aux figures 3, ou 4 ou 5, les procédés illustrés par les figures 6 et 7 sont à aménager pour tenir compte de la deuxième source émettrice S0, de son emplacement et de sa bande spectrale.

Les figures de détail 9 et 10 illustrent une possibilité d'aménagement du procédé de réalisation de l'hologramme dans le cas de deux zones coplanaires (figure 9) ou situées dans des plans différents (figure 10).

La figure 9 montre une possibilité d'aménagement dans le cas de deux zones coplanaires avec un diffuseur D plan transparent et un cache opaque associé CH. Celui-ci, normalement appliqué contre le diffuseur, ne laisse passer le rayonnement S' que par ses parties transparentes ST1 et ST2 qui délimitent les zones de diffusion SD1 et SD2 sur le diffuseur D. L'optique O1 forme ensuite les images de ces deux zones SD1 et SD2 de diffusion à l'emplacement des zones d'observation désirées Z01 et Z02.

La figure 10 montre une autre possibilité d'aménagement dans le cas où les zones d'observation Z01 et Z02 à former ne sont pas coplanaires. On utilise deux éléments diffuseurs plans transparents D1 et D2 qui sont disposés relativement dans des plans distincts comme doivent l'être les zones à former. Les éléments diffuseurs sont éclairés à travers le cache associé CH qui comporte deux aires transparentes ST1 et ST2, par exemple de forme circulaire comme représenté. On a considéré dans cette version une source ponctuelle S' qui illumine les parties SD1 et SD2 des diffuseurs qui sont délimitées par action du cache CH interposé sur le trajet optique.

Comme on l'a vu l'hologramme peut être sélectif en fréquence et rien n'empêche, à titre d'exemple, d'avoir des bandes spectrales différentes dans les deux zones de la figure 10, une première bande spectrale étant diffusée à travers la première zone d'observation Z01 et une deuxième bande spectrale étant diffusée à travers la deuxième zone d'observation Z02. On considère dans ce cas qu'il y a une première source de rayonnement S qui rayonne dans une première bande spectrale et une deuxième source de rayonnement S0 (tracé en pointillé) qui rayonne dans une deuxième bande de rayonnement. De manière généralisée on voit que l'on peut produire une pluralité N de zones d'observation distinctes et une pluralité P de bandes spectrales distinctes le paramètre P de bandes spectrales à diffuser étant au plus égal au nombre N de zones. Chaque zone peut être prévue pour passer au moins une bande spectrale, sinon plusieurs.

Dans le cas simple de la figure 5 la source S peut correspondre à un générateur d'une première image à diffuser et la source S0 à un générateur d'une deuxième image à diffuser en superposition avec la première.

## Revendications

1. Dispositif optique holographique diffuseur comportant un hologramme obtenu par enregistrement d'une plaque photosensible et déterminé pour diffuser un rayonnement lumineux selon des indicatrices qui convergent dans une portion de l'espace en s'appuyant sur un contour fermé, pour délimiter une zone à travers laquelle s'effectue l'observation du rayonnement diffusé par l'hologramme, un premier moyen de visualisation annexe produisant une première image lumineuse à observer, caractérisé en ce que un second moyen de visualisation (3) annexe produit une deuxième image lumineuse, ladite plaque comportant un support (V) transparent permettant d'observer la deuxième image par transmission à travers celle-ci et l'hologramme (H) diffuseur, l'observation simultanée des deux images s'effectuant à travers ladite zone (Z0) dans un champ d'observation délimité par ladite portion d'espace (P0).

2. Dispositif holographique diffuseur selon la revendication 1, caractérisé en ce que l'hologramme (H) produit la diffusion par réflexion du rayonnement lumineux provenant du premier moyen de visualisation (2) qui est situé du même côté que l'observateur par rapport au dispositif diffuseur (1), ledit second moyen de visualisation (3) étant situé de l'autre côté du dispositif diffuseur par rapport à l'observateur.

3. Dispositif holographique diffuseur selon la revendication 2, caractérisé en ce que le second moyen de visualisation (3) produit un rayonnement compris dans une bande spectrale différente de celle du rayonnement émis par le premier moyen de visualisation (2).

4. Dispositif holographique diffuseur selon la revendication 1, caractérisé en ce que le premier moyen de visualisation (2) est situé de l'autre côté du dispositif diffuseur (1) par rapport à l'observateur, les deux images étant observées par transmission.

5. Dispositif holographique diffuseur selon la revendication 4, caractérisé en ce que ledit second moyen de visualisation émet un rayonnement dans une bande spectrale distincte de celle du rayonnement émis par le premier moyen de visualisation (2), un miroir dichroïque (4) étant prévu pour combiner lesdits rayonnements des deux images en direction du dispositif diffuseur (1).

6. Dispositif holographique diffuseur selon l'une quelconque des revendications précédentes, caractérisé en ce que la plaque (V) support de l'hologramme est plane.

7. Dispositif holographique diffuseur selon l'une quelconque des revendications 1 à 6, caractérisé en ce que l'hologramme (H) produit plusieurs zones d'observation distinctes (Z01,Z02).

8. Dispositif holographique diffuseur selon la revendication 7, caractérisé en ce que la diffusion est produite pour un rayonnement lumineux compris dans au moins deux bandes spectrales distinctes.

9. Dispositif holographique diffuseur selon la revendication 8, caractérisé en ce que le rayonnement lumineux diffusé à travers chaque zone d'observation et relatif à un spectre distinct, les bandes spectrales étant en nombre (P) égal à celui (N) des zones d'observation.

10. Dispositif holographique diffuseur selon l'une quelconque des revendications 7 à 9, caractérisé en ce que les zones d'observation ne sont pas coplanaires.

11. Procédé d'obtention d'un dispositif optique holographique diffuseur selon l'une quelconque des revendications 7 à 9, utilisant une première source (S) pour produire une première onde orientée par rapport à l'hologramme (H) de la même manière que dans les conditions d'utilisation envisagées, une deuxième source (S') qui éclaire un élément diffuseur (D) pour produire un objet lumineux diffusant, et une optique (O1) pour produire dudit objet lumineux une image (ID) située à l'emplacement de ladite zone d'observation (Z0) et ayant les dimensions de cette zone, ledit rayonnement diffusé repris par l'optique et divergent dans un cône s'appuyant sur le contour de la zone d'observation constituant la deuxième onde d'enregistrement, caractérisé en ce que l'élément diffuseur (D) est associé à un cache (CH) comportant autant de zones transparentes (ST1,ST2) qu'il y a de zones d'observation (Z01,Z02) à obtenir, et dont les dimensions sont déterminées en conséquence.

12. Procédé selon la revendication 11 pour l'obtention d'un dispositif holographique diffuseur selon la revendication 10, caractérisé en ce que le diffuseur est en plusieurs morceaux (D1,D2) pour produire des zones diffusantes (SD1,SD2) non coplanaires.

13. Procédé selon la revendication 11 ou 12, dans lequel l'optique (O1) utilisée est plan-convexe, la plaque photosensible (V-H) à enregistrer étant transparente et accolée sur la face plane de l'optique.

0290333

FIG_1

FIG_2

0290333

FIG_3

FIG_4

0290333

# FIG_5

# FIG_9

# FIG_10

0290333

# FIG_6

# FIG_7

# FIG_8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 708 217 (McMAHON)<br>* Figure 3; colonne 4, lignes 24-36; colonne 1, ligne 64 - colonne 2, ligne 32 * | 1,4,6 | G 02 B 5/32<br>G 02 B 27/02<br>G 03 H 1/04 |
| A | --- | 11,13 | |
| A | OPTICS LETTERS, vol. 6, no. 11, novembre 1981, pages 517-518, Optical Society of America, New York, US; E. EICHEN et al.: "High-gain holographic screens"<br>* Page 518, colonne de droite, lignes 17-35 * | 3,7-9 | |
| D,A | WO-A-8 204 327 (HUGHES)<br>* Page 1, lignes 2-10; page 5, lignes 17-36; page 8, lignes 13-34; figures 2,6 * | 1,2,4,6,11 | |
| D,A | GB-A-2 104 678 (THE SINGER CO.)<br>* Figures 2,3; page 2, lignes 18-22,33-51; page 3, lignes 51-53 * | 1,11 | |
| A | P. HARIHARAN: "Optical holography", Cambridge University Press, 1984, pages 131,199, Cambridge, GB<br>* Page 131, lignes 3-11; page 199, lignes 4-15 * | 3,8,10,12 | |
| A | APPLIED OPTICS, vol. 12, no. 9, septembre 1973, pages 2180-2184, New York, US; D. MEYERHOFER: "Holographic and interferometric viewing screens"<br>----- | | |

**DOMAINES TECHNIQUES RECHERCHES (Int. Cl.4)**

G 02 B 5/00
G 02 B 27/00

Le présent rapport a été établi pour toutes les revendications

| Lieu de la recherche | Date d'achèvement de la recherche | Examinateur |
|---|---|---|
| LA HAYE | 02-08-1988 | KLEIKAMP B.M.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

& : membre de la même famille, document correspondant

EPO FORM 1503 03.82 (P0402)